# EUROPEAN PATENT APPLICATION

(11) **EP 3 228 369 A1**
(43) Date of publication of application: **11.10.2017**
(21) Application number: 15865493.9
(22) Date of filing: 03.12.2015
(51) Int. Cl.: A63F 9/02, G02B 27/20

(54) **DART GAME SYSTEM PROVIDING LASER LIGHTING EFFECT**

(30) Priority: 03.12.2014 KR 20140172299
(71) Applicant: Hong International Corp., Seoul 08390 (KR)
(72) Inventor: HONG, Sang Uk, Seoul 06075 (KR)
(74) Representative: Camolese, Marco
(86) International application number: PCT/KR2015/013178
(87) International publication number: WO 2016/089147

(57) **Abstract**

Disclosed is a dart game system which is capable of providing a laser lighting effect. The dart game system includes a dart game apparatus and a laser lighting apparatus, in which the dart game apparatus includes: a dart target which includes a plurality of segments and which a thrown dart pin hits, the plurality of segments including a plurality of receiving recesses for receiving respective thrown dart pins, each segment being set with a score corresponding to a position of each segment in the dart target; a sensing unit which detects a segment hit by the dart pin among the segments included in the dart target; and a controller which detects a hitting position of the dart pin at least partially based on a signal received from the sensing unit, progresses a dart game based on the hitting position of the dart pin, and controls the laser lighting apparatus, and the laser lighting apparatus is disposed at a position, at which the laser lighting apparatus radiates a laser to each segment of the dart target, and provides the laser lighting effect to the dart pin at least partially based on a determination of the controller.

## Description

### [Technical Field]

The present disclosure relates to a dart game, and more particularly, to a dart game system for providing a laser lighting effect.

### [Background Art]

In general, a dart means a small arrow, and a dart game is a game in which one makes a score by throwing a dart pin shaped like an arrow to a circular target marked with numbers. The dart game has an advantage in that anyone can enjoy the dart game anytime and anywhere and any place if there are a dart shaped like an arrowhead and a dart target. Recently, the dart game is being developed as a global leisure activity by development of various game rules and organization of scoring method, so that people can conveniently enjoy the dart game regardless of sex and age. Further, recently, soft darts are being popularized, so that an electronic dart game apparatus is popularized.

The dart game is a game, in which a score is calculated according to a position of a target, which a dart pin hits, to progress the game, and the target hitting of the dart pin is a very important factor in the progress of the dart game. A player may enjoy playing a game when the player can sense hitting a target with a dart pin. Accordingly, the transmission of a hitting sense to the player is a very important factor in an entertainment aspect of the dart game.

In general, an electronic dart game apparatus has a problem in that a hitting sense is degraded compared to that of a hard dart. Accordingly, in the entertainment aspect, there are demands for an electronic dart game apparatus which is capable of providing a more improved hitting sense to a player.

Korean Utility Model Laid-Open No. 20-2011-0006016 discloses a dart target having a lighting function.

### [Disclosure]

### [Technical Problem]

The present disclosure has been made in an effort to provide a more improved hitting sense to a player of a dart game apparatus through a laser lighting.

### [Technical Solution]

According to the exemplary embodiment of the present disclosure for implementing the aforementioned object, a dart game system, which is capable of providing a laser lighting effect, is disclosed. The dart game system includes a dart game apparatus and a laser lighting apparatus, in which the dart game apparatus includes: a dart target which includes a plurality of segments and which a thrown dart pin hits, the plurality of segments including a plurality of receiving recesses for receiving respective thrown dart pins, each segment being set with a score corresponding to a position of each segment in the dart target; a sensing unit which detects a segment hit by the dart pin among the segments included in the dart target; and a controller which detects a hitting position of the dart pin at least partially based on a signal received from the sensing unit, progresses a dart game based on the hitting position of the dart pin, and controls the laser lighting apparatus, and the laser lighting apparatus is disposed at a position, at which the laser lighting apparatus radiates each segment of the dart target, and provides the laser lighting effect to the dart pin at least partially based on a determination of the controller.

### [Advantageous Effects]

The present disclosure may provide a more improved hitting sense to a player of a dart game apparatus through laser lighting.

### [Description of Drawings]

FIG. 1 is a block diagram of a dart game apparatus related to an exemplary embodiment of the present disclosure.
FIG. 2 is a perspective view illustrating the dart game system related to the exemplary embodiment of the present disclosure.
FIG. 3 is a diagram illustrating an example of a laser lighting effect of a laser lighting apparatus related to the exemplary embodiment of the present disclosure.
FIG. 4 is a diagram illustrating an example of a laser lighting effect of a laser lighting apparatus related to the exemplary embodiment of the present disclosure.
FIG. 5 is a diagram illustrating an example of a laser lighting effect of a laser lighting apparatus related to another exemplary embodiment of the present disclosure.
FIG. 6 is a diagram illustrating an example of a laser lighting effect of a laser lighting apparatus related to another exemplary embodiment of the present disclosure.
FIG. 7 is a diagram illustrating an example of a laser lighting effect of a laser lighting apparatus related to another exemplary embodiment of the present disclosure.
FIG. 8 is a diagram illustrating a laser lighting effect of a laser lighting apparatus related to another exemplary embodiment of the present disclosure. [Best Mode]

Various exemplary embodiments will be described with reference to the accompanying drawings, and like reference numerals are used for designating like constituent elements throughout the drawings. In the present specification, various descriptions are suggested for helping to understand the present disclosure. However, it is apparent that the exemplary embodiments may be carried out without a particular description. In other examples, publicly-known structures and devices are provided in a form of a block diagram in order to easily describe the exemplary embodiments.

Terms "component", "module", "system", and the like used in the present specification refer to a computer-related entity, hardware, firmware, software, a combination of software and hardware, or execution of software. For example, the component may be a processing process, a processor, an object, an execution thread, a program, and/or a computer executed in a processor, but is not limited thereto. For example, all of an application executed in a computing device and the computing device may be components. One or more components may reside within a processor and/or an execution thread, and one component may be localized within one computer, or distributed between two or more computers. Further, the components may be executed by various computer readable media having various data structures stored in the media. The components may communicate through local and/or remote processing according to, for example, a signal (for example, data transceived with another system through a network, such as the Internet, from one component inter-working with another component in a local system and a distribution system) including one or more data packets.

Descriptions of the suggested exemplary embodiments are provided so that those skilled in the art may use or carry out the present disclosure. Various modifications of the exemplary embodiments may be apparent to those skilled in the art, and general principles defined herein may be applied to other exemplary embodiments without departing from the scope of the present disclosure. Accordingly, the present disclosure is not limited to the exemplary embodiments suggested herein, and shall be interpreted within the broadest meaning range consistent to the principles and new characteristics suggested herein.

Terms, a "dart" and a "dart pin", used in the present specification may be frequently exchanged and used. Further, terms, a "player" and a "user", used in the present specification may also be frequently exchanged and used. Further, terms, a "point" and an "area", used in the present specification may also be frequently exchanged and used.

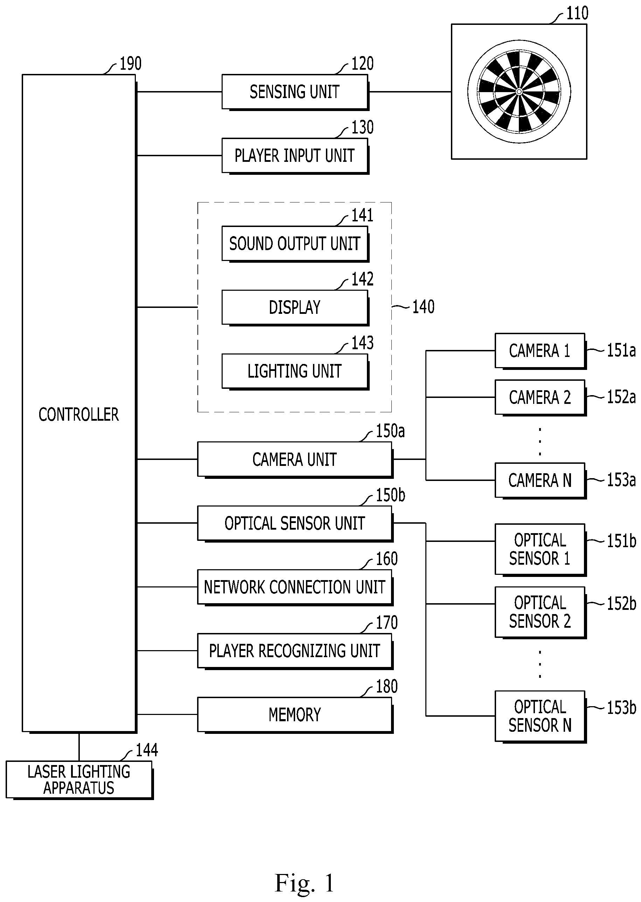

FIG. 1 is a block diagram illustrating a dart game system related to an exemplary embodiment of the present disclosure.

A dart game system 100 related to an aspect of the present disclosure may include a laser lighting apparatus 144. The dart game apparatus may include a dart target 110, a sensing unit 120, a player input unit 130, an output unit 140, a camera unit 150, a network connection unit 160, a player recognizing unit 170, a memory 180, and a controller 190. Since the constituent elements illustrated in FIG. 1 are not essential, a dart game system having more constituent elements or less constituent elements may be implemented. Hereinafter, the constituent elements will be described in sequence.

The dart target 110 may include a score board, in which a bullseye is positioned at a center thereof, and which includes concentric circles based on the bullseye and areas divided by straight lines radially extended from the bullseye and having assigned individual scores. A plurality of holes, into which a tip of a dart may be fitted, may be disposed on the score board.

The dart target 110 includes a display 142, which will be described below, to variably change a score disposition and a shape of the areas, to which the scores are assigned, of the dart target 110. In this case, the dart target 110 may include a light transmissive touch pad which is laminated on the display 142 to have a form of a touch screen.

The sensing unit 120 may detect a play of a dart game players performed with respect to the dart target 110. The sensing unit 120 may evaluate an actual play of a game player. For the play, in which the game player throws a dart pin, the sensing unit 120 may sense an area of the dart target 110, which the thrown dart pin hits.

Further, the sensing unit 120 may electrically convert a score corresponding to the area, in which the dart pin is fixed, and transmit the converted score to the controller 190. Further, the sensing unit 120 may transmit an electrical signal corresponding to the area, in which the dart pin is fixed, to the controller 190, and herein, a score corresponding to the electrical signal may be calculated by the controller 190.

The player input unit 130 receives an input of a player for controlling the dart game apparatus 101. The player input unit 130 may include a key pad, a dome switch, a touch pad (capacitive/resistive), a jog wheel, a jog switch, and the like. The player input unit 130 may also include cameras 151, ..., and 153, a microphone, and the like. Additionally, the player input unit 130 may also include a short range communication module (not illustrated) which will be described below.

In the exemplary embodiment of the present disclosure, the player input unit 130 may also include a short range communication module (not illustrated) of the network connection unit 160. When the player input unit 130 includes the short range communication module of the network connection unit 160, the player input unit 130 may receive a user input input by an external console device. As a short range communication technology, a Bluetooth, radio frequency identification (RFID), infrared data association (IrDA), ultra wideband (UWB), ZigBee, and the like may be used.

For example, when the player input unit 130 establishes the short range communication by using the IrDA, an external console device may be an infrared remote controller. Otherwise, when the player input unit 130 establishes the short range communication by using the Bluetooth function, an external console device may be a mobile device including a Bluetooth module. The mobile device including the Bluetooth module may be, for example, a smart phone including a Bluetooth module.

A player may select a dart game method, a match making request, a match approval, the number of dart game players, a dart game play method, and the like through the player input unit 130. For example, the player may select the number of dart game players, a dart game play method (a zero-one game, a cricket game, a count-up game, and the like), a dart game method (a one-person play, a network play, and the like), an off-line match making request, and a match approval, through the player input unit 130.

The user input unit 130 may detect a key operation or a touch input of the user to receive a signal, or receive a voice or an operation through the cameras 151, ..., and 153 or the microphone of the user and convert the received voice or operation into an input signal. To this end, a publicly-known speech recognition technology or motion recognition technology may be used.

The output unit 140 generates an output related to a visual sense, an auditory sense, a tactile sensor, or the like, and may include a sound output module 141, the display 142, a lighting unit 143, and the like.

The sound output module 141 may output audio data received from the network connection unit 160 or stored in the memory 180 in sound effects of a game, a game operation guide, a game method explanation, and the like. The sound output module 141 may also output a sound signal related to a function (for example, a game sound effect) performed in the dart game apparatus 100. The sound output module 141 may also output a sound from a game player using another dart game apparatus or a third person received through the network connection unit 160. The sound output module 141 may include a receiver, a speaker, a buzzer, and the like. Additionally, as described below, when the dart game apparatus 100 measures a speed of a projected dart pin, information and/or a reward for the speed may also be output as audio information by the sound output module 141.

The display 142 displays (outputs) information processed by the dart game apparatus 100. For example, when the dart game apparatus 100 is in a game play method guide mode, the display 142 may output a selectable game play method. When the dart game apparatus 100 is being operated, the display 142 may display a score sensed through the sensing unit 120, or output an image obtained by photographing a game player using another dart game apparatus or a third person received through the network connection unit 160.

The display 142 may include at least one of a liquid crystal display (LCD), a thin film transistor liquid crystal display (TFT LCD), an organic light emitting diode (OLED), a flexible display, and a 3D display.

Among them, some displays may be formed in a transparent type or a light transmissive type, through which an outside may be viewed. This may be called a transparent display, and a representative example of the transparent display is a transparent OLED (TOLED).

Two or more displays 142 may be present according to an implementation form of the dart game apparatus 100. For example, in the dart game apparatus 100, a plurality of displays may be displayed on one surface while being spaced apart from one another or being integrated with one another, or may also be disposed on different surfaces, respectively. For example, the display 142 may include both the display 142 disposed at an upper end of the target 110 and a display disposed at a lower end of the target 110, or may include any one display 142 among them. However, the position of the display disposed is one example, and the display may be disposed at various positions for a necessity in design or a visual effect.

The touch sensor may be configured to convert a change in a pressure applied to a specific region of the display 142, a capacitance generated at a specific region of the display 142, or the like into an electrical input signal. The touch sensor may be configured to detect even a pressure of the touch, as well as a position and an area of the touch.

When a touch input is generated in the touch sensor, a signal(s) corresponding to the touch input is transmitted to a touch controller. The touch controller processes the signal(s), and then transmits corresponding data to the controller 190. Accordingly, the controller 190 may recognize a touched region of the display 142.

The lighting unit 143 outputs a signal for notifying a generation of an event of the dart game apparatus 100. Examples of the event generated in the dart game apparatus 100 include an identification of a dart game player, a target hitting of the dart, a change in a dart game player, and a game termination. The lighting unit 143 may include a light emission diode (LED), thereby notifying a user of the generation of the event through flickering of the LED. The LEDs may be disposed on a rear surface of the dart target 110, thereby flickering according to a pre-stored flickering pattern according to the generation of the event. For example, one or more LEDs may be allocated to each part of the dart target 110. The allocated LEDs may be disposed on the rear surface of the dart target 110, and may be disposed in a direction toward an outside of the dart game apparatus 100. When the LEDs radiate light, the light radiated by the LEDs may pass through the dart target 110 which is formed of a transparent or a semi-transparent material to transmit a visual output to the user. Otherwise, the light radiated by the LEDs may transmit a visual output to the user through a gap existing in the dart target 110.

The output unit 140 may also output a signal for notifying the generation of the event in another form, for example, vibration, other than a video signal or an audio signal. In one aspect of the present disclosure, as illustrated in FIG. 1, the output unit 140 may also cover the sound output unit 141, the display 142, and the lighting unit 143. For example, the output unit 140 may output information on a measured speed of the dart pin and/or a reward for the measured speed of the dart pin in various methods.

The camera unit 150 may include the plurality of cameras 151, ..., and 153, and image frames processed by the cameras 151, ..., and 153 may be stored in the memory 180 or may be transmitted to the outside through the network connection unit 160. The camera unit 150 may be formed of one camera or may also be formed of two or more cameras according to a usage environment.

In the aspect of the present disclosure, at least some cameras of the camera unit 150 are disposed so as to photograph image frames including the dart target 110, and other cameras may also be disposed so as to photograph image frames which are directly related to a game rule in the dart game play. For example, the camera may be disposed so as to photograph a throw-line, in which a player throws the dart, in order to photograph an image frame directly related with the dart game rule. The plurality of cameras 151, ..., and 153 included in the camera unit 150 may be disposed so that at least some image frames are photographed while overlapping. In the exemplary embodiment of the present disclosure, when the camera unit 150 includes one camera, the camera may be a panorama camera disposed so as to photograph both at least a part of the dart target 110 and an image frame (for example, the throw-line in the dart game) directly related with the game rule.

In the aspect of the present disclosure, the camera unit 150 may also be disposed so as to photograph a part of the throw-line and/or a player together with two or more points in a movement path of the dart pin. Otherwise, the camera unit 150 may also be disposed so as to photograph at least a part of the dart target 110 together with two or more points in a movement path of the dart pin. This is for the purpose of determining a foul play of a player and measuring a speed of the dart pin. The camera unit 150 may perform the foregoing photographing through one camera or the plurality of cameras.

The network connection unit 160 may include one or more modules, which are capable of establishing wireless communication between the dart game apparatus 100 and a wired/wireless communication system or the dart game apparatus 100 and a network in which the dart game apparatus 100 is positioned. In the exemplary embodiment of the present disclosure, the network connection unit 160 may include a transmitting unit and a receiving unit. The network connection unit 160 may include a wired/wireless Internet module for a network connection. As the wireless Internet technology, wireless LAN (WLAN, Wi-Fi), a wireless broadband (Wibro), world interoperability for microwave access (Wimax), and high speed downlink packet access (HSDPA), and the like may be used. As the wired Internet technology, a digital subscriber line (XDSL), fibers to the home (FTTH), power line communication (PLC), and the like may be used.

Further, the network connection unit 160 may include a short range communication module and transceive data with an electronic device which is positioned in a relatively short distance from the dart game apparatus 100 and includes a short range communication module. As a short range communication technology, a Bluetooth, radio frequency identification (RFID), infrared data association (IrDA), ultra wideband (UWB), ZigBee, and the like may be used. In the exemplary embodiment of the present disclosure, the network connection unit 160 may detect a connection state of a network and a transmission/reception speed of a network. The data received through the network connection unit 160 may be output through the output unit 140, may be stored through the memory 180, or may be transmitted to other electronic devices located in a short distance through the short range communication module.

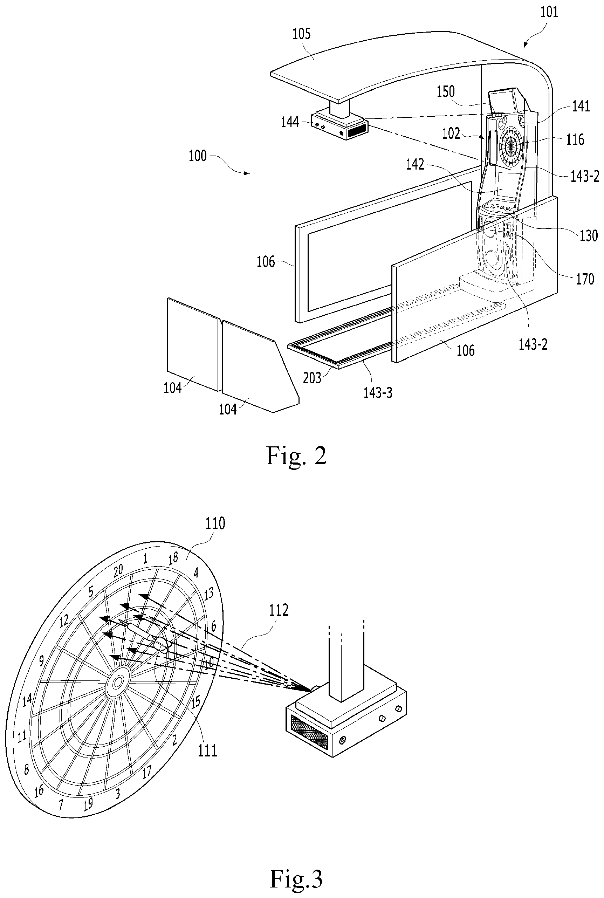

The player recognizing unit 170 may recognize unique information about a remote player based on a radio wave by using the RFID technology that is the kind of short range communication technology. For example, a user may possess a card including an RFID module, a mobile terminal, or unique dart game equipment, for example, user's own personal dart equipment. Information for identifying the user (for example, a personal ID and an identification code of the user registered in a database server DB (see FIG. 2)) may be recorded in the RFID module possessed by the player. The dart game apparatus 100 may identify the RFID module possessed by the user, so that the dart game apparatus 100 may identify a dart game player playing the dart game by using the dart game apparatus 101, and update a database for the identified dart game player or accumulate new data. In the exemplary embodiment of the present disclosure, the player recognizing unit 170 may be combined into the player input unit 130.

The player recognizing unit 170 may include various technologies (for example, the short range communication technology, such as Bluetooth) which are capable of transmitting/receiving unique information about a user by a contact/contactless method, in addition to the RFID technology. Further, the player recognizing unit 170 may include a biodata identification module which is linked with the microphone, the touch pad, the camera unit 150, and the like of the user input unit 130 to identify biodata (a voice, a fingerprint, and a face) of the player.

The memory 180 may store a program for an operation of the controller 190, and may temporarily or permanently store input/output data (for example, a phone book, messages, still images, and video images). The memory 180 may store data about various patterns of vibration and sounds output when a touch is input into the touch screen. The memory 180 may include at least one type of storage medium among a flash memory type, a hard disk type, a multimedia card micro type, and the card type of memory (for example, an SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game apparatus 100 may be operated in association with a web storage which performs a storage function of the memory 180 on the Internet.

Additionally, according to the exemplary embodiment of the present disclosure, laser lighting patterns 112 which are to be displayed by the laser lighting apparatus 144 may be pre-stored in the memory 180.

The controller 190 generally controls the general operation of the dart game apparatus 100. For example, the dart game collects a score detected through the sensing unit 120 for each game participant, transceives the collected score with another dart game apparatus 100 connected through the network, and records a game win/lose record according to the collection result, a score, and the like. The controller 190 may perform a pattern recognizing process which is capable of recognizing an action input, a writing input, and the like performed on the touch screen or the camera as a character or an image. Further, the controller may perform speech recognition by using a speech-to-text (STT) function of recognizing a voice input through the microphone as a character.

As illustrated in FIG. 1, the controller 190 may communicate with all of the other aforementioned components, thereby organically controlling the operations of the other aforementioned components.

Various exemplary embodiments described herein may be implemented in, for example, a recording medium readable by a computer or a device similar to a computer by using software, hardware, or a combination thereof. According to the hardware implementation, the exemplary embodiments described herein may be implemented by using at least one among application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units for performing other functions. In some cases, the exemplary embodiments described in the present specification may be implemented by using the controller 190 itself. According to the software implementation, the exemplary embodiments, such as the procedure and the function, described in the present specification may be implemented by using separate software modules. Each of the software modules may perform one or more functions and operations described in the present specification. A software code may be implemented with a software application written with an appropriate program language. The software code may be stored in the memory 180, and may be executed by the controller 190.

According to the exemplary embodiment of the present disclosure, the controller 190 may detect a hitting position of the dart pin 111 based on at least a part of a signal received from the sensing unit 120. Further, according to the exemplary embodiment of the present disclosure, the controller 190 may perform the dart game based on a hitting position of the dart pin 111. For example, when the dart pin 111 thrown by a first player hits a large single part of 20 points, the controller 190 may give a score corresponding to the hitting position of the dart pin 111 to the first player. The foregoing description is a simple example, and the controller 190 may variously progress the dart game based on the detected hitting position of the dart pin.

Further, according to the exemplary embodiment of the present disclosure, the controller 190 may control the laser lighting apparatus 144. The controller 190 may control the laser lighting apparatus 144 to provide a laser lighting effect 112 to a player with a predetermined pattern. The predetermined pattern according to the exemplary embodiment of the present disclosure may include at least one of a pattern related to a segment which is hit by the dart pin, a pattern related to a segment which is not hit by the dart pin, and a pattern related to a target segment at which a dart game player aims according to the progress of the dart game. The foregoing description of the pattern is a simple example, and the laser lighting apparatus 144 may provide various patterns of laser lighting effect to a dart game player. The pattern of the laser lighting effect will be described below.

Hereinafter, a representative rule of a dart game and a status of a player related to the rule will be described.

A dart game executable by the dart game apparatus 100 according to the exemplary embodiment of the present disclosure may include a 01 game (zero-one game), a cricket game, a count up game, a matchup mode, and the like.

The 01 game progresses in the manner in which two teams (or two players) alternately throw darts to a dart target for each round. One round includes throwing a dart three times per person. A goal of the game is that a sum of a score of each round reaches a target score (generally, a score, such as 301, 501, 701, 901, 1101, and 1501, in the hundreds or thousands ended with 01). The target score and the play round may be randomly adjusted according to the number of participating players.

Similar to the 01 game, in the cricket game, a player performs a round by throwing three darts in one round. A standard cricket game may progress by using a bull area at a center of a dart target and areas marked with 20, 19, 18, 17, 16, and 15 points. When a corresponding cricket number is marked three times, the corresponding cricket number is marked as a stronghold of the player, and when the corresponding cricket number is marked four or more times, a score corresponding to the number is added to compete marks. Here, a double area and a triple area of the dart target may be calculated with 2 marks and three marks, respectively. In the state where the corresponding cricket number is marked as the stronghold of the player, when an opponent of the player also marks the cricket number three times, the corresponding cricket number may correspond to a closed number, so that the score may not be added any longer. A goal of the game may be set to obtain a higher score until a regulated round is terminated or closed all of the cricket numbers and obtain a higher score than that of an opponent.

The count-up game is a game, in which when a player obtains a high score within a predetermined round, the player wins.

In the aspect of the present disclosure, independently from a victory/defeat of the count-up game, the cricket game, and the 01 game, a stats of a player may be defined according to a corresponding game rule.

For example, a points per dart (PPD) may be calculated by dividing the total score obtained by the player by the number of times of throwing a dart in the 01 game. Otherwise, a marks per round (MPR) may be calculated by counting the number of times of the mark by the player per one round. For example, in the cricket game, when a player throws the dart three times in one round, and the players hits a triple 15, a single 19, and a double 20 in three chances of dart throwing, respectively, MPR is that (3 + 1 + 2)/1 = 6.00 (MPR). In a subsequent round, when the player throws the dart three times, and the player fails to score, and hits a double 18 and a single 20, MPR is that (3 + 1 + 2 + 0 + 2+ 1)/2 =4.5 (MPR).

The PPD and the MPR are the stats of the player, and may be stored as personal data or identification data of the player. Otherwise, in the count-up game, an average score of a player per game, a highest score record of a player per game, and the like may be stored as the stats of the player.

FIG. 2 is a perspective view illustrating the dart game system 100 related to the exemplary embodiment of the present disclosure.

As illustrated in FIG. 2, the dart game system 100 related to the exemplary embodiment of the present disclosure may generally be formed of the dart game apparatus 101 and the laser lighting apparatus 144. Further, according to the exemplary embodiment of the present disclosure, the dart game system 100 may include a laser scattering device (not illustrated).

The laser lighting apparatus 144 may also be installed in a structure 105 forming a roof positioned over of a player according to the exemplary embodiment of the present disclosure. FIG. 2 only illustrates that the laser lighting apparatus 144 is installed in the structure 105 forming the roof positioned over the player, but a position of the laser lighting apparatus 144 is variable, so that the laser lighting apparatus 144 may be variously installed at a position at which the laser lighting apparatus 144 is capable of radiating the laser lighting effect 112. Further, FIG. 2 illustrates one laser lighting apparatus 144, but the dart game system according to the exemplary embodiment of the present disclosure may also include a plurality of laser lighting apparatuses 144. Further, the laser lighting apparatus 144 may also be installed on a ceiling, a wall surface, and the like of a place in which the dart game apparatus 100 is installed. Further, the laser lighting apparatus 144 may be positioned between a player and the dart game apparatus 100 (for example, at least one of the structure 105 forming the roof positioned over the player and a structure 106 disposed at a lateral side of the player). When the laser lighting apparatus 144 is positioned in a rear surface of the player, an output of laser lighting may also be adjusted according to the relevant regulations. Further, the laser lighting apparatus 144 may also be installed in the dart game apparatus. The foregoing description is a simple example, and the laser lighting apparatus 144 according to the exemplary embodiment of the present disclosure may be positioned at various positions, at which the laser lighting apparatus 144 is capable of radiating a laser to the dart target 110.

The laser lighting apparatus 144 may include a plurality of laser emitting units. The laser emitting unit may radiate a laser to the dart target 110. According to the exemplary embodiment of the present disclosure, the laser emitting unit of the laser lighting apparatus 144 may radiate a laser to each segment of the dart target 110.

According to the exemplary embodiment of the present disclosure, the laser lighting apparatus 144 may provide the laser lighting effect 112 at least partially based on a segment, which the dart pin 111 hits, among the segments included in the dart target 110. Further, according to the exemplary embodiment of the present disclosure, the laser lighting apparatus 144 may radiate the laser lighting 112 to one or more segments adjacent to the segment of the dart target, which the dart pin hits, to provide an effect of a converging line for hitting of the dart pin to the dart game player. The converging line according to the exemplary embodiment of the present disclosure is a line drawn for emphasizing dynamics of an object desired to be emphasized, and may include a line drawn while turning 360° from a center in a direction of a boundary.

Further, according to another exemplary embodiment of the present disclosure, the laser lighting apparatus 144 may radiate laser lighting to the segment, which the dart pin 111 hits, among the segments of the dart target 110 to provide the laser lighting effect to a player.

Further, according to another exemplary embodiment of the present disclosure, when the dart pin does not hit the dart target, the laser lighting apparatus 144 may provide an effect of a converging line for the dart target 110. The dart game player may exert higher concentration for the dart target 110 by the effect of the converting line, and as a result, an accuracy rate may be improved. Further, when the dart pin 111 does not hit the dart target 110, the laser lighting apparatus 144 provides the laser lighting effect to the dart target 110, thereby providing a more improved hitting sense even to the dart game player who fails to hit the dart target 110. Accordingly, it is possible to further enhance an entertainment aspect of the dart game by improving a hitting sense of the dart game player through the laser lighting apparatus 144.

Further, according to another exemplary embodiment of the present disclosure, the laser lighting apparatus 144 may provide the laser lighting effect, which radiates a laser to the dart game apparatus 100, in order to attract the dart game player. Even when the dart game is not played, in order to entice a potential dart game player to the dart game apparatus, the laser lighting apparatus 144 may provide the laser lighting effect which radiates a laser to the dart game apparatus 100. Accordingly, the player may be enticed to the dart game apparatus 100.

The laser scattering device (not illustrated) may be disposed so as to generate a laser scattering means in a path of the laser lighting effect between the laser lighting apparatus 144 and the dart game apparatus 100 so that the dart game player easily recognizes the laser lighting effect. The laser scattering device (not illustrated) may enable the player to easily recognize the laser lighting effect by using the laser scattering means, such as dry ice and vapor. The foregoing laser scattering means is a simple example, and various laser scattering means may be generated by the laser scattering device.

The dart game apparatus 101 may be formed by mounting the components illustrated in FIG. 1 in a housing 102. The dart target 110 or 116, the display 142, the lighting unit 143, the sound output unit 141, the camera unit 150, the user recognizing unit 170, and the like may be disposed on a front surface of the dart game apparatus 101. Further, the dart game apparatus 101 may include all of a structure 104 disposed in a rear side of the player, the structure 105 forming the roof positioned over the player, the structure 106 disposed in a lateral side of the player, and the like. The structure may include a form of a booth, a throw line, a path, a pillar, a wall, and the like.

The dart target 110 or 116 may be disposed so that a right center of the dart target is positioned at a position (for example, five feet and 8 inches in a vertical direction from the ground) according to the rule of the dart game. Lighting units 143-1, 143-2, and 143-3 may be disposed in various parts of the dart game apparatus 101, thereby transmitting various and variable visual effects to the player of the dart game apparatus 101. For example, the lighting unit 143-1 may be extended in a vertical direction along a protruding part in a direction of a front surface of the housing 102. The lighting unit 143-1 may output a predetermined lighting effect according to an event of the dart game, and output the lighting effect with various colors.

The lighting unit 143-2 may be disposed in a lateral portion of the user recognizing unit 170. The lighting unit 143-2 may output a predetermined lighting effect according to an event of the dart game, and output the lighting effect with various colors. Particularly, the lighting unit 143-2 may output a lighting effect for an event related to the user recognizing unit 170.

Optionally, the dart game apparatus 101 may include a dart plate 203 which is optionally connectable with the dart game apparatus 101 and is extended in a horizontal direction. The dart plate 203 may further include the lighting unit 143-3. The dart plate 203 may be integrally coupled with the dart game apparatus 101 or may be selectively detachable from and attachable to the dart game apparatus 101.

When the dart plate 203 is integrally coupled with the dart game apparatus 101 or is selectively attached to the dart game apparatus 101, the dart plate 203 may be electrically connected to the dart game apparatus 101. The lighting unit 143-3 of the dart game apparatus 101 may be disposed along an outer portion of the dart plate 203 as illustrated in FIG. 2. One end portion of the dart plate 203 may be extended from the dart target according to the rule of the game to a place, in which the throw line needs to be positioned according to a distance of the throw line. The lighting unit 143-3 may be positioned at a position corresponding to the throw line.

Although not illustrated in FIG. 2, the lighting unit (not illustrated) may be disposed in a rear surface of the dart target 110 to radiate the lighting effect in a direction of a user (player). The lighting unit (not illustrated) may include a combination of different lighting elements allocated to the respective segments forming the dart target.

The housing 102 of the dart game apparatus 101 may include the display 142 disposed in the direction of the user. The display 142 may display information necessary to the user (for example, a total score, information about a player who is currently playing, a score necessary for clearing a corresponding game, and information about an opponent player who is not currently playing) according to the progress of the dart game. The display 142 may display a visual effect according to an event according to the progress of the dart game. For example, when the user continuously hits the bull's eye right at the center of the dart target 110 or 116 in three chances of dart throwing, the display 142 may display a pre-stored video in response to a corresponding event. The video may be stored in the memory 180 of the dart game apparatus 101 or may be received from a server through the network connection unit 160.

The display 142 may be linked with the lighting units 143-1, 143-2, and 143-3 and the sound output unit 141 to provide visual and auditory effects according to the generation of the event to the user. That is, when a predetermined event is generated, the display 142, the lighting units 143-1, 143-2, and 143-3, and the sound output unit 141 may output a lighting effect, a display effect, and a sound effect for the corresponding event together.

As illustrated in FIG. 2, the display 142 may also be disposed at a lower end of the dart target 110 or may be disposed at an upper end of the dart target 110. The number and the disposition position of the display 142 may be variously changed.

The user input unit 130 may be formed in a form of a key pad button as illustrated in FIG. 2. However, as described above, the user input unit 130 may also be formed by various methods including a touch screen. The user may select a game mode desired to be played, an offline matching request, a match approval, and the like by operating a key button of the user input unit 130.

The sound output unit 141 may also be disposed in the front portion of the housing 102 of the dart game apparatus 101 to output a sound. The number and the disposition position of the sound output unit 141 may also be variously changed.

The lighting unit 143 and the sound output unit 141 according to the exemplary embodiment of the present disclosure may be installed in a part or the entirety of the plate 203 of the dart game apparatus, the structure 104 disposed in the rear side of the player, the structure 105 forming the roof positioned over the player, and the structure 106 disposed in the lateral side of the player, as well as the main body 102 of the dart game apparatus.

The camera unit 150 may be mounted on an upper portion of the housing 102 of the dart game apparatus 101 as illustrated in FIG. 2. A disposition position of the camera unit 150 may be variable. The camera unit 150 may include one or more cameras 151, 152, ..., and 153 which are capable of photographing the dart target 116 and the throw line. The image photographed through the camera unit 150 may be transmitted to the memory 180. Otherwise, the image photographed through the camera unit 150 may also be transmitted to a server or other dart game apparatus through the network connection unit 160. According to the exemplary embodiment of the present disclosure, only a part of a video photographed by the camera unit 150 may be finally stored in the memory 180, or may be transmitted to the server and the like through the network connection unit 160.

The user recognizing unit 170 may be mounted on a front portion of the housing 102 of the dart game apparatus 101 as illustrated in FIG. 2, and may include a short range communication module. The user may complete a user authentication by touching a card for recognizing the user to a neighboring area of the user recognizing unit 170.

The contents illustrated in FIG. 2 and the description of the appearance of the dart game apparatus 101 are the simple examples presented for the description, and the dart game apparatus 101 according to the present disclosure is not limited to the appearance illustrated in FIG. 2.

FIG. 3 is a diagram illustrating an example of the laser lighting effect of the laser lighting apparatus related to the exemplary embodiment of the present disclosure.

The laser lighting apparatus 144 according to the exemplary embodiment of the present disclosure may include the plurality of laser emitting units, and may radiate the laser 112 to one or more segments adjacent to the segment of the dart target 110, which the dart pin 111 hits, to provide an effect of a converging line for hitting of the dart pin to the dart game player.

As illustrated in FIG. 3, the laser lighting apparatus 144 may provide the laser lighting effect, by which the player views the laser 112 like a converging line for the hitting of the dart pin, by radiating the laser to one or more segments adjacent to the segment of the dart target 110, which the dart pin 111 hits.

FIG. 3 illustrates that the laser lighting apparatus 144 positioned in one place radiates the laser, but in order to provide the laser lighting effect of the converging line pattern according to the exemplary embodiment of the present disclosure, the plurality of laser lighting apparatus 144 may be disposed at a plurality of positions within the dart game system.

Further, in order to implement the laser lighting effect of the converging line pattern, the dart game system may include a laser reflecting device (not illustrated), and the laser lighting apparatus 144 may enable the laser 112 to be viewed in a boundary direction from the center based on the segment, which the dart pin hits, by radiating the laser to the laser reflecting device (not illustrated). For example, the lasers emitted from the laser lighting apparatus 144 may be radiated to the laser reflecting devices (not illustrated) and scattered, and then may be reflected from the laser reflecting devices and collected in the dart target 110.

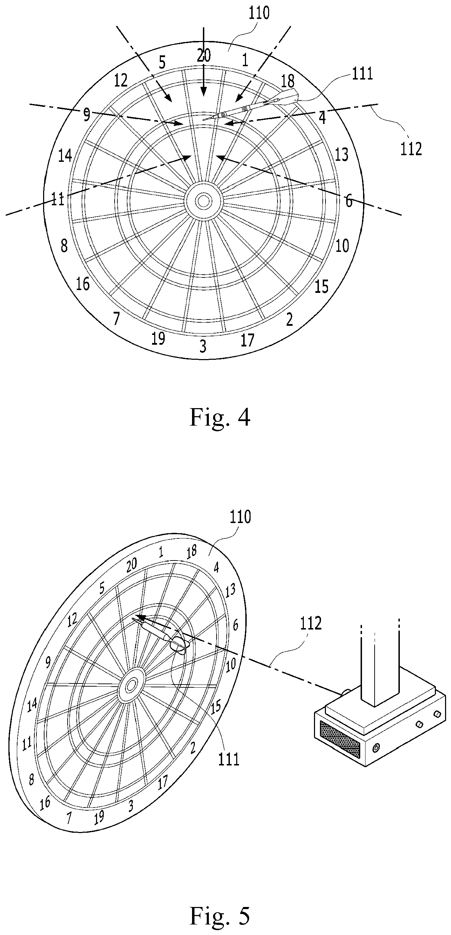

FIG. 4 is a diagram illustrating an example of the laser lighting effect of the laser lighting apparatus related to the exemplary embodiment of the present disclosure.

FIG. 4 is a diagram illustrating an example of the laser lighting effect illustrated in FIG. 3 at a viewpoint of a player.

As illustrated in FIG. 4, the laser lighting apparatus 144 according to the exemplary embodiment of the present disclosure may include the plurality of laser emitting units, and may radiate the laser 112 to one or more segments adjacent to the segment of the dart target 110, which the dart pin 111 hits, to provide an effect of a converging line for hitting of the dart pin to the dart game player.

The foregoing laser lighting effect may be provided to the dart game player immediately after the dart pin hits the target. Accordingly, the dart game player may feel a more improved hitting sense, and enjoy the dart game with the enhanced entertainment aspect of the dart game. The foregoing laser lighting effect may be provided to the player immediately after the dart pin hits the target for a predetermined time, and may disappear after the predetermined time elapses. The laser lighting effect according to the exemplary embodiment of the present disclosure disappears after the predetermined time elapses, so that when the player aims at the dart target 110 for throwing a next dart pin, the laser lighting effect may not disturb the player. The generation time of the foregoing laser lighting effect is a simple example, and the laser lighting apparatus 144 may provide the laser lighting effect at an appropriate time according to the progress of the dart game.

FIG. 5 is a diagram illustrating an example of the laser lighting effect of the laser lighting apparatus related to another exemplary embodiment of the present disclosure.

The laser lighting apparatus 144 according to another exemplary embodiment of the present disclosure may radiate the laser 112 to a segment which the dart pin 111 hits. The laser lighting apparatus 144 may provide a target hitting line effect to a player by radiating the laser 112 to the segment which the dart pin 111 hits. The target hitting line may be a line, by which a player may easily recognize the segment, which the player hits, on the dart target 110.

As illustrated in FIG. 5, the laser lighting apparatus 144 may provide the effect, by which the player views the laser 112 like the target hitting line for the hitting of the dart pin, by radiating the laser to the segment of the dart target 110, which the dart pin 111 hits.

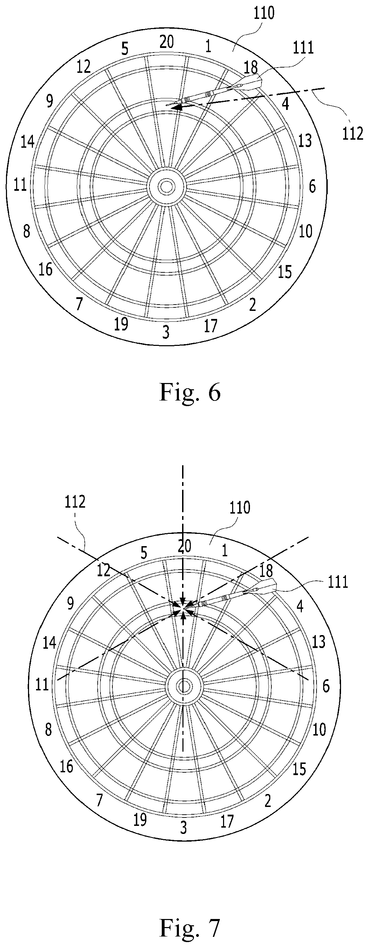

FIG. 6 is a diagram illustrating an example of the laser lighting effect of the laser lighting apparatus related to another exemplary embodiment of the present disclosure.

FIG. 6 is a diagram illustrating an example of the laser lighting effect illustrated in FIG. 5 at a viewpoint of a player.

According to the exemplary embodiment of the present disclosure, the laser lighting apparatus 144 may provide the effect, by which the player views the laser 112 like the target hitting line for the hitting of the dart pin, by radiating the laser 112 to the segment of the dart target 110, which the dart pin 111 hits. The player may more easily determine the hitting position of the dart pin 112 by the laser lighting effect providing the target hitting line. In a case of a soft dart, there may be a case where the dart pin 112 is not received in the segment of the dart target 110, but is bounced off the segment of the dart target 110. Even in this case, the dart pin 112 is in contact with the segment of the dart target 110 before the dart pin 112 is bounced off, so that the dart game apparatus 100 may detect the segment of the dart target 110 which the dart pin 112 is in contact with before the dart pin 112 is bounced off. In this case, the dart game apparatus 100 may recognize that the dart pin 112 hits the segment and gives a score to progress the game. However, the dart pin 112 is not received in the dart target 110, so that there is a problem in that the player cannot feel a hitting sense. The laser lighting apparatus 144 provides the laser 112 lighting effect of providing the target hitting line in the foregoing situation, thereby enabling the player to more easily recognize the hitting position of the dart pin 112 thrown by the player. Further, the laser lighting apparatus 144 may enable the player to feel a more improved hitting sense even though the dart pin 112 is bounced off.

The foregoing laser lighting effect may be provided to the dart game player immediately after the dart pin hits the target. Accordingly, the dart game player may feel a more improved hitting sense, and enjoy the dart game with an enhanced entertainment aspect of the dart game. The foregoing laser lighting effect may be provided to the player for a predetermined time immediately after the dart pin hits the target, and may disappear after the predetermined time elapses. The laser lighting effect according to the embodiment of the present disclosure disappears after the predetermined time elapses, so that when the player aims at the dart target 110 for throwing a next dart pin, the laser lighting effect may not disturb the player. The generation time of the laser lighting effect is a simple example, and the laser lighting apparatus 144 may provide the laser lighting effect at an appropriate time according to the progress of the dart game.

FIG. 7 is a diagram illustrating an example of the laser lighting effect of the laser lighting apparatus related to another exemplary embodiment of the present disclosure.

FIG. 7 is a diagram illustrating the laser lighting effect 112 of the laser lighting apparatus 144 related to another exemplary embodiment of the present disclosure at a viewpoint of a player.

According to the exemplary embodiment of the present disclosure, the laser lighting apparatus 144 may radiate the laser 112 to a segment, which the dart pin 112 hits, and the plurality of segments adjacent to the segment, which the dart pin 112 hits, to provide an effect, in which the player views the laser 112 as a target hitting line and a converging line for the hitting of the dart pin. The converging line and the target hitting line have been described above.

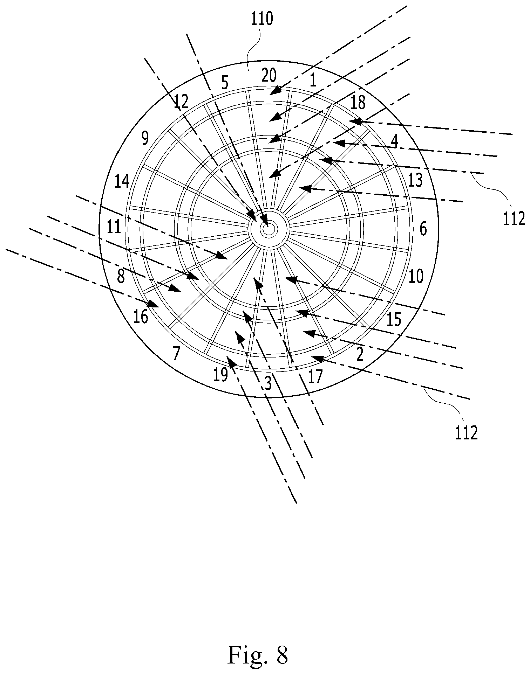

FIG. 8 is a diagram illustrating an example of the laser lighting effect of the laser lighting apparatus related to another exemplary embodiment of the present disclosure.

FIG. 8 is a diagram illustrating the laser lighting effect 112 of the laser lighting apparatus 144 related to another exemplary embodiment of the present disclosure at a viewpoint of a player.

According to the exemplary embodiment of the present disclosure, the laser lighting apparatus 144 may radiate the laser 112 to a target segment at which a dart game player aims according to the progress of the dart game.

The target segment at which the dart game player aims according to the progress of the dart game may mean a segment, which the dart game player needs to hit with the dart pin 111, among all of the segments of the dart target 110 during the progress of the dart game. For example, a cricket game may progress by using a bulls eye area at a center of a dart and areas marked with 20, 19, 18, 17, and 16 points. The display 142 may display a dart game score area at which the player needs to aim. However, it may be difficult for a dart game beginner to recognize a part of the dart target 110, which the dart pin 112 needs to hit, only with the display of the score area, at which the player needs to aim, displayed on the display. Accordingly, according to another exemplary embodiment of the present disclosure, the laser lighting apparatus 144 may radiate the laser 112 to the bulls eye area at the center of the dart target and the areas marked with 20, 19, 18, 17, and 16 points to enable the player to easily recognize a segment of the dart target 110 at which the player needs to aim. The foregoing segment at which the player needs to aim according to a game mode is a simple example, and according to another exemplary embodiment of the present disclosure, the laser lighting apparatus 144 may radiate the laser 112 to various segments, at which the player needs to aim, in the progress situation of the dart game.

Further, according to another exemplary embodiment of the present disclosure, the laser lighting apparatus 144 may radiate the laser 112 to a target segment at which the player aims according to the progress of the dart game. For example, in the case of the cricket game, when a corresponding cricket number is marked three times, the corresponding cricket number is marked as a stronghold of the player, and when the corresponding cricket number is marked four or more times, a score corresponding to the number is added. In this case, when a first player hits the segment corresponding to 20 points in the case where the first player marks 20 points three times, the first player may obtain the score. Accordingly, the laser lighting apparatus 144 may enable the first player to aim at the corresponding segment by radiating the laser 112 to the segment of 20 points in the dart target 110 in a throwing order of the first player. Further, in the case of the cricket game, when all of the players mark a specific cricket number three times, the player cannot obtain the score even though the player hits the corresponding number. For example, when all of the players mark 20 points three times, the laser lighting apparatus 144 may radiate the laser 112 to other segments except for the segment of 20 points in the dart target 110 to prevent the player from aiming at the segment of 20 points. The foregoing radiation of the laser lighting is a simple example, and the laser lighting apparatus 144 may radiate the laser to a segment at which a player needs to aim in various game modes.

Those skilled in the art may understand that information and signals may be expressed by using predetermined various and different technologies and schemes. For example, data, directions, commands, information, signals, bits, symbols, and chips, which may be referred to in the foregoing description, may be implemented by voltages, currents, electromagnetic waves, magnetic fields or particles, optical fields or particles, or a predetermined combination thereof

Those skilled in the art may understand that various exemplary logical blocks, modules, processors, means, circuits, and algorithm steps described in relation to the exemplary embodiments disclosed herein may be implemented by electronic hardware, various types of programs or design codes (for convenience, referred to as "software" herein), or a combination thereon. In order to clearly describe inter-compatibility of hardware and software, various exemplary components, blocks, modules, circuits, and steps have been generally described above in relation to the functions thereof. Whether the function is implemented with hardware or software depends on design limitations imposed to a specific application and the entire system. Those skilled in the art may implement the described functions with various methods for each specific application, but it shall not be construed that the determinations of the implementation depart from the scope of the present disclosure.

Various exemplary embodiments presented herein may be implemented as a manufactured article using a method, an apparatus, a standard programming, and/or an engineering technology. A term "manufactured article" includes a computer program, a carrier, or media accessible by a predetermined computer readable device. For example, the computer readable medium includes a magnetic storage device (for example, a hard disc, a floppy disc, and a magnetic strip), an optical disc (for example, a CD and a DVD), a smart card, and a flash memory device (for example, an EEPROM, a card, a stick, and a key drive), but is not limited thereto. Further, various storage media presented herein include one or more devices and/or another machine-readable medium for storing information. A term "machine-readable medium" includes a wireless channel and other various media capable of storing, possessing, and/or transporting a command(s) and/or data, but is not limited thereto.

It shall be understood that a specific sequence or a hierarchy structure of the steps included in the presented processes is an example of exemplary accesses. It shall be understood that based on a design priority, a specific sequence or a hierarchy structure of the steps included in the present processes may be re-arranged within the scope of the present disclosure. The accompanying method claims provide elements of various steps as a sample sequence, but do not mean the limitation to the presented specific sequence or hierarchy structure.

Descriptions of the presented exemplary embodiments are provided so that those skilled in the art may use or carry out the present disclosure. Various modifications of the exemplary embodiments may be apparent to those skilled in the art, and general principles defined herein may be applied to other exemplary embodiments without departing from the scope of the present disclosure. Accordingly, the present disclosure is not limited to the exemplary embodiments suggested herein, and shall be interpreted within the broadest meaning range consistent to the principles and new characteristics suggested herein.

### [Mode for carrying out the invention]

From the foregoing, relevant contents have been described in the best mode for carrying out the invention.

### [Industrial Applicability]

The present disclosure may be used in a digital device, a dart device, a dart game device, an entertainment device, a dart server, and the like.

## Claims

1. A dart game system providing a laser lighting effect, the dart game system comprising:
a dart game apparatus and a laser lighting apparatus,
wherein the dart game apparatus includes:
a dart target which includes a plurality of segments and which a thrown dart pin hits, the plurality of segments including a plurality of receiving recesses for receiving respective thrown dart pins, each segment being set with a score corresponding to a position of each segment in the dart target;
a sensing unit which detects a segment hit by the dart pin among the segments included in the dart target; and
a controller which detects a hitting position of the dart pin at least partially based on a signal received from the sensing unit, progresses a dart game based on the hitting position of the dart pin, and controls the laser lighting apparatus, and
wherein the laser lighting apparatus is disposed at a position, at which the laser lighting apparatus radiates a laser to each segment of the dart target, and provides the laser lighting effect to the dart target at least partially based on a determination of the controller.

2. The dart game system of claim 1, wherein the laser lighting effect is provided at least partially based on the segment hit by the dart pin among the segments included in the dart target.

3. The dart game system of claim 1, wherein the laser lighting apparatus is positioned at any one place among a place between the dart game apparatus and a dart game player, a rear side of the dart game player, and a front side of the dart game apparatus.

4. The dart game system of claim 1, wherein the laser lighting apparatus includes a plurality of laser emitting units, and
the laser lighting effect is radiated to one or more segments adjacent to the segment of the dart target hit by the dart pin to provide a dart game player with an effect of a converging line for the hitting of the dart pin.

5. The dart game system of claim 1, wherein the laser lighting effect is radiated to the segment hit by the dart pin in the laser lighting apparatus.

6. The dart game system of claim 1, wherein the laser lighting effect is radiated to a target segment at which a dart game player needs to aim according to a progress of the game by the laser lighting apparatus.

7. The dart game system of claim 1, wherein when the dart pin fails to hit, the laser lighting effect provides an effect of a converging line for the dart target.

8. The dart game system of claim 1, wherein the laser lighting effect is radiated to the dart game apparatus in order to entice a dart game player.

9. The dart game system of claim 1, further comprising:
a laser scattering device which scatters the laser in a path of the laser lighting effect so that a dart game player easily recognizes the laser lighting effect.
